# EUROPÄISCHE PATENTANMELDUNG

(11) **EP 4 538 012 A1**
(43) Veröffentlichungstag der Anmeldung: **16.04.2025**
(21) Anmeldenummer: 23203199.7
(22) Anmeldetag: 12.10.2023
(51) Int. Cl.: B29C 43/52, B29C 35/08, B29C 43/00, B29C 51/00, B29C 51/42, B29C 59/00, B29C 59/02, H04R 31/00, B29K 75/00, B29K 105/00, B29L 7/00, B29L 31/38

(54) **FORMGEBUNGS-VERFAHREN**

(71) Anmelder: Isovolta AG, 2355 Wiener Neudorf (AT)
(72) Erfinder: Zechner, Christian, 8962 Gröbming (AT); Pertl, Peter, 8042 Graz (AT)
(74) Vertreter: Schwarz & Partner Patentanwälte GmbH

(57) **Zusammenfassung**

Die vorliegende Erfindung betrifft ein Verfahren zur Prägung eines Kunststoffmaterials, gekennzeichnet durch die Kombination der Merkmale
- das Kunststoffmaterial (2) ist elektrisch polar
- Das Kunststoffmaterial (2) wird mittels hochfrequenter Wechselspannung erwärmt, in erwärmtem Zustand geprägt und wieder abgekühlt.

## Beschreibung

Die vorliegende Erfindung betrifft ein Verfahren zur Prägung von Kunststoffmaterialien.

### Hintergrund der Erfindung

Thermoplastische Kunststoffteile mit komplexer Geometrie werden häufig in mehrstufigen Prozessen gefertigt.

In einem ersten Schritt werden beispielsweise Folien, Platten oder andere Halbzeuge in einem Extrusions- oder Spritzgussprozess durch Einsatz entsprechender thermoplastischer Werkstoffe gefertigt.

In einem weiteren Verarbeitungsschritt werden die gefertigten Materialien durch erneutes Erhitzen plastisch in eine komplexe Form gebracht, in welcher sie nach der Deformation abgekühlt werden, um in dieser Form zu verbleiben. Durch den ausgeübten Druck erlangt die Formmasse die vom Werkzeug vorgegebene Form.

Häufig angewandte Verfahren in diesem Bereich sind beispielsweise Tiefziehen oder Heißprägen. Bei beiden Verfahren wird der Kunststoff vorzugsweise über Wärmeleitung durch temperierte Werkzeuge, indirekt auf seine Umformtemperatur erhitzt, mittels Druckbeaufschlagung in Form gebracht und danach wieder abgekühlt. In manchen Fällen erfolgt das Aufheizen auch über Konvektion oder optischen Strahlungsenergie wie z.B. mit IR-Strahlern.

Sofern eine Erwärmung des Kunststoffes über optische Strahlungsquellen nicht möglich ist, werden Kunststoffe überwiegend durch Wärmeleitung oder Konvektion auf werkstoffspezifische Verarbeitungstemperaturen erhitzt, um sie anschließend in einem formgebenden Prozess weiter zu verarbeiten.

Der für die Erwärmung der Halbzeuge maßgebende Wärmetransport in das Innere des Materials ist hingegen nicht davon abhängig, in welcher Weise die Oberflächentemperatur etabliert wird.

Aus der US 2023/0167282 A1 ist ein Verfahren zur Herstellung von Kunststoffmembranen bekannt, wonach ein flüssiges Präpolymer mit einem Compoundiermittel vermischt und in eine Form gespritzt wird, um den gesamten Hohlraum der Form auszufüllen. Anschließend wird die Mischung durch Anlegen von Druck bei einer werkstoffspezifischen Temperatur zu einer Membran vernetzt.

Die oben angeführten Prozesse benötigen für die Formgebung von Kunststoffen hingegen viel Zeit und Energie, insbesondere für das Erhitzen als auch für das Abkühlen der Halbzeuge. Speziell bei schlecht wärmeleitenden Kunststoffen ist der Wärmeeintrag über Werkzeuge, welche meist auch schlecht thermisch isoliert sind, besonders ineffizient.

Dies gilt insbesondere für die Herstellung relativ kleiner Formen aus Kunststoffen, wie insbesondere Membranen für Lautsprecher und Mikrolautsprecher für Mobiltelefone, Notebooks, Tablets, Spielkonsolen, Kopfhörer, Freisprecheinrichtungen oder moderne Fernseher.

Meist lässt die Bauform von Lautsprecher oder Mikrofonen kein einheitliches Design zu und verlangt von den Herstellern große Flexibilität. Darüber hinaus werden oft kleinste Bauformen mit maximaler Leistung gefordert. Dennoch werden höchste Anforderungen an die akustische Qualität gestellt. All diese Anforderungen stellen enorme technologische Ansprüche an die Membran, die als Herzstück eines Lautsprechers bzw. Mikrofons fungiert.

So offenbart die US 2023/0156406 A1 eine Membran für einen wasserdichten Hochdruck-Mikrolautsprecher, wobei eine Seitenmembran die obere und untere Peripherie der mittleren Mittelmembran umgibt. Die Seitenmembran wird beipielsweise durch Spritzgießen von Silikonkautschuk oder Silikonharz hergestellt.

Als weiteres Beipiel beschreibt die US 2023/0164490 A1 eine Membran für schallerzeugende Vorrichtungen, welche insbesondere die akustische Qualität bei hohen Tönen verbessert. Die Membran umfasst unter anderen eine Verbundschicht, welche konvex ausgestaltet sein kann, wobei die Formgebung der Membran oder deren Schichten keine Beachtung findet.

### Zusammenfassung der Erfindung

Die vorliegende Erfindung hat daher die Aufgabe, ein effizientes Verfahren zur Herstellung von Geometrien in Kunststoffen bereitzustellen.

Die Aufgabe wird gelöst durch ein Verfahren zur Prägung eines Kunststoffmaterials, gekennzeichnet durch die Kombination der Merkmale
- das Kunststoffmaterial ist elektrisch polar
- Das Kunststoffmaterial wird mittels hochfrequenter Wechselspannung erwärmt, in erwärmtem Zustand geprägt und wieder abgekühlt.

### Kurzbeschreibung der Figuren

Figur 1 zeigt ein im Verfahren der vorliegenden Erfindung verwendetes Werkzeug im offenen Zustand, bestehend aus einem Oberstück 1 und Unterstück 3. Das ungeprägte Kunststoffmaterial 2 befindet sich auf dem Unterstück 3 des Werkzeugs.
Figur 2 zeigt das Werkzeug im geschlossenen Zustand, nachdem das Kunststoffmaterial 2 bereits erwärmt, erweicht und durch den Schließdruck des Oberstücks 1 und des Unterstücks 3 plastisch geprägt wurde.
Figur 3 zeigt das geprägte Kunststoffmaterial 2 im abgekühlten Zustand nach abgeschlossenem Thermoformzyklus.

### Beschreibung der Ausführungsformen

Das Erhitzen von polaren Materialien durch Anlegen eines hochfrequenten elektromagnetischen Feldes ist an und für sich bekannt und findet vor allem in Fügeverfahren zum dauerhaften Verbinden von zwei oder mehr Materialien Anwendung (z.B. Schweißen).

Es ist sich überraschenderweise gezeigt, dass gewünschte Geometrien in einem elektrisch polaren Kunststoff durch Erwärmung mittels hochfrequenter Wechselspannung und anschließender Prägung erzeugt werden können. Aufgrund der hochfrequenten Anregung von elektrisch polarem Material werden die Moleküle in Schwingung versetzt, wobei sich der Kunststoff innerhalb von wenigen Sekunden durch die entstehende Reibungswärme der schwingenden Moleküle erhitzen und prägen lässt.

Im Gegensatz zu konventionellen Methoden, bei welchen der Kunststoff durch Wärmeleitung erwärmt wird, wird in dem erfindungsgemäßen Verfahren die Energie in Form von Wechselspannung direkt in das Polymer eingetragen. Somit werden sowohl Prozesszeit als auch Energieaufwand gegenüber gängigen Verfahren deutlich reduziert.

Unter dem Begriff "Prägen" wird im Folgenden ein Formgebungsverfahren verstanden, bei dem Muster auf ein Kunststoffmaterial aufgetragen und/oder Öffnungen durch das Material gestanzt werden. Dabei können die geprägten Muster drei-dimensionale Geometrien mit unterschiedlichen Erhebungen und Vertiefungen aufweisen. Insbesondere das Prägen komplizierter Geometrien auf ein Kunststoffmaterial kann durch das erfindungsgemäße Verfahren realisiert werden.

Gemäß einer besonders vorteilhaften Ausführungsform ist das Verfahren dadurch gekennzeichnet, dass es in einem Werkzeug durchgeführt wird. Insbesondere die Erwärmung des elektrisch polaren Kunststoffmaterials mittels hochfrequenter Wechselspannung sowie die Prägung und Abkühlung desselben erfolgt vorzugsweise durch das Werkzeug der vorliegenden Erfindung.

Das Kunststoffmaterial kann nach der Erwärmung in dem Werkzeug verfließen und durch Druck in die vom Werkzeug vorgegebene Form geprägt werden. Nach dem Abkühlen wird das Material aus dem Werkzeug entnommen und kann gegebenenfalls nach- oder weiterverarbeitet werden.

In einer weiteren Ausführungsform ist das Verfahren dadurch gekennzeichnet, dass das Werkzeug aus Metall besteht.

Vorzugsweise besteht das Werkzeug weiters aus einem nichtleitenden, temperaturstabilen Material. Das nichtleitende, temperaturstabile Material kann Glas sein. Das nichtleitende, temperaturstabile Material hat den Vorteil, dass der Energieeintrag in das Kunststoffmaterial gleichmäßiger erfolgt und weniger Wärmeverluste auftreten. Weiters ist das Kurzschlussrisiko während des Prozesses geringer.

Vorzugsweise besteht das Werkzeug aus einem Oberstück und einem Unterstück. Das Oberstück ist auf der gegenüberliegenden Seite des Unterstücks angeordnet. Ober- und Unterstück können die gleichen oder voneinander unterschiedliche Formen aufweisen, um dem Kunststoffmaterial Form bzw. Gestalt zu verleihen. Das Kunsstoffmaterial wird bevorzugt zwischen Ober- und Unterstück des Werkzeugs eingebracht.

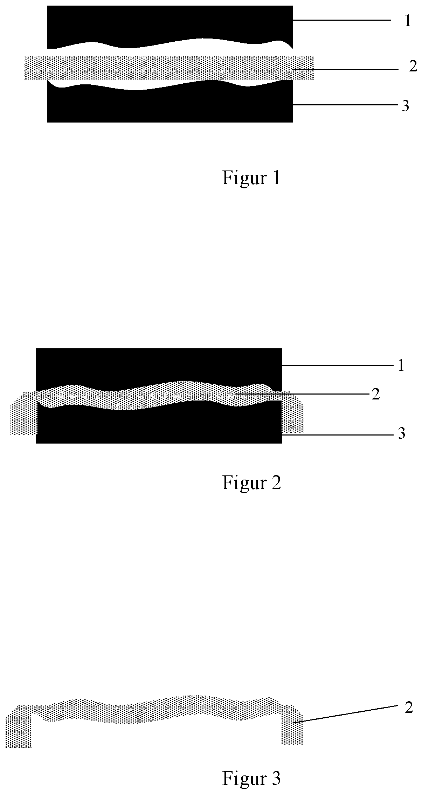

Figur 1 zeigt beispielsweise ein Werkzeug bestehend aus einem Oberstück 1 und einem gegenüberliegenden Unterstück 3, im offenen Zustand. Das ungeformte, elektrisch polare Kunststoffmaterial 2 wird im nicht erwärmten Zustand auf das Unterstück 3 des Werkzeugs gelegt.

In einer besonders vorteilhaften Ausführungsform des Verfahrens ist das Werkzeug als spannungsführende Elektrode ausgestaltet. Durch Anlegen einer Hochfrequenz-Spannung an die spannungsführende Elektrode wird das elektrisch polare Kunststoffmaterial in dem Werkzeug erwärmt. Dies hat den Vorteil, dass der Kunststoff durch ein Werkzeug in einem Schritt erwärmt und geprägt werden kann und somit einen effizienten Prozess ermöglicht. Das Werkzeug selbst wird nicht durch Anlegen der Hochfrequenz-Spannung erwärmt, sondern kann sich lediglich aufgrund der Wärmeleitung des erhitzten Kunststoffmaterials erwärmen.

Vorzugsweise ist das Verfahren dadurch gekennzeichnet, dass das Oberstück des Werkzeugs über eine Hochspannungsquelle mit Wechselspannung versorgt wird, wobei das Unterstück einen geerdeten Gegenpol zum Oberstück darstellt. Die Feldstärke des erzeugten Hochfrequenzfeldes zwischen dem Ober- und Unterstücks führt zu einer Erwärmung des elektrisch polaren Kunststoffmaterials zwischen den beiden Elektroden.

Unter "hochfrequent" ist im Rahmen der Erfindung eine Frequenz zu verstehen, die hoch genug ist, um das elektrisch polare Kunststoffmaterial zu erwärmen.

Vorzugsweise wird das Kunststoffmaterial durch Anlegen hochfrequenter Wechselspannung bei einer Frequenz zwischen 20 und 40 MHz erwärmt.

In dem erfindungsgemäßen Verfahren muss keine Wärme von außen zugeführt werden. Die Wärme entsteht durch Anlegen der hochfrequenten Wechselspannung in dem Kunststoffmaterial selbst.

Bei der Prägung des erwärmten Kunststoffmaterials werden Oberstück und Unterstück des Werkzeuges geschlossen und mit hohem Druck gehalten. Die Prägung wird vorzugsweise bei einem Druck zwischen 0,1 und 500 N/mm², insbesondere zwischen 10 und 20 N/mm² durchgeführt.

Es wurde gefunden, dass es ausreicht, wenn zur Prägung der Druck auf das Kunststoffmaterial für 0,5 bis 30 Sekunden, vorzugsweise für maximal 10 Sekunden gehalten wird. Dadurch kann die Prozesszeit des erfindungsgemäßen Verfahrens weiter verkürzt werden. Bei herkömmlichen Verfahren muss der Druck hingegen meist über mehrere Minuten gehalten werden, um eine entsprechende Prägung zu erzielen.

Vorzugsweise wird die Umsetzung des erfinderischen Verfahrens mit einer Anordnung gemäß Figur 2 realisiert, bei der das elektrisch polare Kunststoffmaterial 2 durch Anlegen hochfrequenter Wechselspannung zwischen dem Oberstück 1 und dem Unterstück 3 des Werkzeugs erwärmt und durch Schließen des Ober- und Unterstücks 1,3 unter Druck geformt wird.

Überschüssiges Kunststoffmaterial wird durch das Schließen des Ober- und Unterstücks verdrängt. Das Werkzeug enthält bevorzugterweise einen mechanischen Anschlag, der das Berühren des Ober- und Unterteils verhindert sowie die Dicke des geprägten Kunststoffmaterials bestimmt.

In einer weiteren Ausführungsform ist das Verfahren dadurch gekennzeichnet, dass das Werkzeug vor, während und/oder nach der Prägung des Kunststoffmaterials gekühlt wird. Das Werkzeug kann als spannungsführende Elektrode derart ausgestaltet sein, dass das Kunststoffmaterial schnell abgekühlt werden kann. Dies hat den Vorteil, den Abkühlungsprozess kurz zu halten. Vorzugsweise wird das Kunststoffmaterial während der Prägung gekühlt, wodurch der Abkühlprozess des Materials deutlich beschleunigt werden kann. Nach dem Prägen und Abkühlen kann das Material aus dem Werkzeug entfernt und anschließend weiterverarbeitet werden.

Figur 3 zeigt das geprägte Kunststoffmaterial 2 im abgekühlten Zustand nach dem erfindungsgemäßen Verfahren.

Bis zur Prägung durch das Werkzeug des erfindungsgemäßen Verfahrens liegt das Kunststoffmaterial als ungeprägtes Material vor. Unter einem "ungeprägten Material" soll ein Kunststoffmaterial verstanden werden, welches bereits in einem vorbereitenden Fertigungsschritt eine grundlegende Form erhalten hat, aber noch für weitere Prägungsschritte vorgesehen ist.

In einer weiteren vorteilhaften Ausführungsform des Verfahrens liegt das Kunststoffmaterial als Folie vor.

Als "Folie" wird ein Kunststoffmaterial bezeichnet, welches als flexibles flächiges Erzeugniss, z.B. in Rollenform oder als schmales Band, vorliegt. Das erfindungsgemäße Verfahren hat sich bei der Prägung eines Kunststoffmaterials in Form einer Folie als besonders vorteilhaft herausgestellt, in dem es zu einer signifikanten Prozesszeitverkürzung der plastischen Deformation führt.

Das Kunststoffmaterial kann weiters in Form von mehreren Folien vorliegen.

Das Kunststoffmaterial kann vorzugsweise vollständig oder teilweise ein Duromer sein. "Duromere" betreffen Kunststoffe, die nach ihrer Aushärtung durch Erwärmung oder andere Maßnahmen nicht mehr verformt werden können.

Eine besonders bevorzugte Ausführungsform des Verfahrens ist dadurch gekennzeichnet, dass das Kunststoffmaterial ein Material ausgewählt aus der Gruppe bestehend aus Polyurethan und Mischungen davon ist.

Es hat sich weiters überraschenderweise gezeigt, dass das Verfahren der vorliegenden Erfindung für das Prägen von dünnen Kunststoffmaterialien vorteilhaft ist.

Vorzugsweise liegt das Kunststoffmaterial vor der Prägung in einer Dicke von 0,02 bis 2 mm vor.

In einer bevorzugten Ausführungsform ist das Verfahren der vorliegenden Erfindung dadurch gekennzeichnet, dass das Kunststoffmaterial während der Prägung mit zumindest einem anderen Kunststoffteil verbunden wird. Dies hat den Vorteil, dass zwei oder mehrere Komponenten während des Prägens in einem Schritt effizient miteinander verbunden werden können.

Bevorzugt ist das zumindest eine Kunststoffteil ebenfalls aus elektrisch polarem material, wodurch es mit dem Kunststoffmaterial verschweißt wird. Es ist aber beispielsweise auch ein Einbetten eines anderen Materials in das durch die hochfrequente Wechselspannung erweichte Kunststoffmaterial möglich.

In einer weiteren Ausführungsform ist das Verfahren der vorliegenden Erfindung dadurch gekennzeichnet, dass das geprägte Kunststoffmaterial als Membran für einen Lautsprecher eingesetzt wird.

Vorzugsweise kann das geprägte Kunststoffmaterial auch als Membran für einen Mikrolautsprecher oder ein Mikrophon eingesetzt werden.

Das erfindungsgemäße Verfahren stellt eine kostengünstige und effektive Methode dar, um Akustikmembranen in unterschiedlichen Formen aus Kunststoff zu produzieren.

Es hat sich gezeigt, daß es mittels dem Verfahren der gegenständlichen Erfindung einfach möglich ist, geprägte Kunststoffmaterialien herzustellen, die zu einer Lautsprecher-Membran oder eine Mikrophon-Membran mit sehr guten akustischen Eigenschaften weiterverarbeitet werden können.

Es ist bekannt, dass die Dicke und die Härte der Membran für Lautsprecher, insbesondere für Mikrolautsprecher einen erheblichen Einfluss auf die akustische Qualität hat.

Vorzugsweise hat das geprägte Kunststoffmaterial als Membran für einen Mikrolautsprecher eine Dicke von 10 bis 300 µm.

Weiters kann das geprägte Kunststoffmaterial als Membran für einen Mikrolautsprecher eine Shore-Härte von 10 bis 95 A aufweisen. Die Bestimmung der Shore-Härte A wird mit einem Durometer durchgeführt und ist dem Fachmann bekannt.

## Patentansprüche

1. Verfahren zur Prägung eines Kunststoffmaterials, **gekennzeichnet durch** die Kombination der Merkmale
- das Kunststoffmaterial (2) ist elektrisch polar
- Das Kunststoffmaterial (2) wird mittels hochfrequenter Wechselspannung erwärmt, in erwärmtem Zustand geprägt und wieder abgekühlt.

2. Verfahren gemäß Anspruch 1, **dadurch gekennzeichnet, dass** es in einem Werkzeug durchgeführt wird.

3. Verfahren gemäß Anspruch 1 oder 2, **dadurch gekennzeichnet, dass** das Werkzeug aus einem Oberstück (1) und einem Unterstück (3) besteht.

4. Verfahren gemäß Anspruch 2 oder 3, **dadurch gekennzeichnet, dass** das Werkzeug als spannnungsführende Elektrode ausgestaltet ist.

5. Verfahren gemäß Anspruch 4, **dadurch gekennzeichnet, dass** das Werkzeug vor, während und/oder nach der Prägung des Kunststoffmaterials (2) gekühlt wird.

6. Verfahren gemäß einem der vorhergehenden Ansprüche, **dadurch gekennzeichnet, dass** das Kunststoffmaterial (2) in Form einer Folie vorliegt.

7. Verfahren gemäß einem der vorhergehenden Ansprüche, **dadurch gekennzeichnet, dass** das Kunststoffmaterial (2) ein Material ausgewählt aus der Gruppe bestehend aus Polyurethan und Mischungen davon ist.

8. Verfahren gemäß einem der vorhergehenden Ansprüche, **dadurch gekennzeichnet, dass** das Kunststoffmaterial (2) vor der Prägung in einer Dicke von 0,02 bis 2 mm vorliegt.

9. Verfahren gemäß einem der vorhergehenden Ansprüche, **dadurch gekennzeichnet, dass** das Kunststoffmaterial (2) während der Prägung mit zumindest einem anderen Kunststoffteil verbunden wird.

10. Verfahren gemäß einem der vorhergehenden Ansprüche, **dadurch gekennzeichnet, dass** das geformte Kunststoffmaterial als Membran für einen Lautsprecher, insbesondere einen Mikro-Lautsprecher für Mobilfunkgeräte, eingeesetzt wird.
